# EUROPÄISCHE PATENTSCHRIFT

(11) **EP 2 297 700 B1**
(45) Veröffentlichungstag und Bekanntmachung des Hinweises auf die Patenterteilung: **02.11.2011**
(21) Anmeldenummer: 09749383.7
(22) Anmeldetag: 13.05.2009
(51) Int. Cl.: G06T 7/00

(54) **OPTISCHES KONTROLLVERFAHREN BEI DER DRUCKWEITERVERARBEITUNG**
OPTICAL CONTROL METHOD FOR FURTHER PRINT PROCESSING
PROCÉDÉ DE CONTRÔLE OPTIQUE LORS DU TRAITEMENT ULTÉRIEUR DE PRODUITS D'IMPRESSION

(30) Priorität: 21.05.2008 CH 767082008
(43) Veröffentlichungstag der Anmeldung: 23.03.2011
(73) Patentinhaber: Ferag AG, 8340 Hinwil (CH)
(72) Erfinder: MAEDER, Carl Conrad, CH-8335 Hittnau ZH (CH)
(74) Vertreter: Rentsch Partner AG
(86) Internationale Anmeldenummer: PCT/CH2009/000157
(87) Internationale Veröffentlichungsnummer: WO 2009/140779

(56) Entgegenhaltungen:
- EP-A- 0 685 420
- JP-A- 2001 246 870
- JP-A- 2007 017 214

## Beschreibung

Die vorliegende Erfindung fällt in das Gebiet der Weiterverarbeitung von bedruckten Erzeugnissen und betrifft ein Verfahren zur optischen Erkennung von Unregelmässigkeiten bei der Druckweiterverarbeitung von flächigen Druckereierzeugnissen gemäss Oberbegriff des Patentanspruchs 1 sowie eine Vorrichtung zur optischen Erkennung von Unregelmässigkeiten bei der Druckweiterverarbeitung von flächigen Druckereierzeugnissen gemäss Oberbegriff des Patentanspruchs 10.

Aus der US 2006/0147092 A1 ist bekannt, dass bei der Verarbeitung von flächigen Druckereierzeugnissen optische Erfassungssysteme eingesetzt werden, um den stetig steigenden Qualitätsansprüchen gerecht werden zu können. Dabei werden die Druckereierzeugnisse mit einem Fördermittel an mindestens zwei optischen Sensoren vorbei geführt, welcher aktuelle Aufnahmen der Druckereierzeugnisse erstellen. Diese werden digitalisiert und in einer Bildverarbeitungseinheit mit Bildern eines Sollzustandes der Druckereierzeugnisse verglichen, wobei diese Bilder in verschiedenen Winkeln aufgenommen worden sind. Je nach Ergebnis des Bildvergleichs wird Signal erzeugt.

Die US 2005/0105766 A1 offenbart ein Verfahren zur Identifikation einzelner Briefe und aneinanderhaftender Briefe auf dem Fachgebiet der Postverarbeitung. Dabei erfasst ein optischer Sensor ein aktuelles Bild mit einem einzelnen Brief oder mehreren aneinanderhaftenden Briefen, welche jeweils ein Objekt bilden und errechnet mit einer Konturextraktionsfunktion die Kontur des Objektes. Weist die Kontur des Objektes eine im Wesentlichen konstantes eindimensionales Mass auf, so wird dies als ein einziger Brief interpretiert, während ein Objekt mit einer nicht konstanten Breite als ein Bündel von mehreren aneinanderhaftenden Briefen interpretiert wird.

Die EP 0685420 offenbart ein mit optischen Sensoren im Fördertakt einer Fördervorrichtung arbeitendes Kontrollverfahren zur Erkennung von fehlenden Bestandteilen von Druckereierzeugnissen bei deren Herstellung. Dazu nimmt ein jeder Bestandteilzuführung zugeordneter optischer Sensor jeweils ein aktuelles Bild auf. Eine Bildverarbeitungseinheit vergleicht dabei jedes aktuelle Bild mit entsprechenden, gespeicherten Eichbildern. Weicht ein aktuelles Bild vom entsprechenden Eichbild ab, wird ein Steuer- oder Alarmsignal erzeugt

Im Unterschied zur EP 0685420 offenbart die EP 0700853 A1 zusätzlich die Möglichkeit, ein zwecks Vergleichs aufgenommenes und in einem Speicher abgelegtes Sollbild durch ein aktuelles Bild zu ersetzen. Dazu wird das vom optischen Sensor erfasste, aktuelle Bild zum Sollbild für zukünftige Vergleiche.

In der EP0685420A der Anmelderin ist ein Kontrollverfahren offenbart, das mit Hochleistungs-Herstellungsverfahren von Druckprodukten durch Sammeln, Einstecken und/oder Zusammentragen, beispielsweise mit Hilfe einer Trommel, anwendbar ist. Es besteht darin, die entstehenden Produkte nach jeder Zugabe eines weiteren Bestandteiles durch Aufnahme eines Bildes mit einem Bildaufnahmegerät und Vergleich des aufgenommenen Bildes mit einem entsprechenden, gespeicherten Eichbild zu vergleichen und die Vergleichsresultate zur Generierung von Steuersignalen beispielsweise zur Ausschleusung fehlerhafter Produkte oder von Alarmsignalen zu verwenden. Anstelle von im wesentlichen stationär angeordneten Bildaufnahmegeräten können auch bewegbare Leseköpfe eingesetzt werden.

Aus der JP2007017214A sind eine Kontrollvorrichtung und ein Kontrollverfahren zur Inspektion von Drucksachen beschrieben. Es werden ein Bild einer Referenzregion und Bilder ähnlicher Regionen aufgenommen. Zunächst wird ein Maskenfeld aus solchen Feldern gebildet, die keine Muster enthalten. Das Maskenfeld wird von der weiteren Bildverarbeitung ausgenommen, um den Korrelationskoeffizienten zu erhöhen. Dann werden Differenzen zwischen den Bildern der Referenzregion und ähnlicher Regionen gebildet und daraus Defekte der Drucksachen zu ermitteln.

Die JP2001246870A offenbart ein Verfahren und eine Vorrichtung zur Überwachung der Zusammenstellung der Seiten bei einer Buchbindemaschine. Mehrere Behälter, welche die zusammenzustellenden Drucksachen enthalten, werden von jeweils einer Kamera 2 überwacht. Die Bilder werden mit einem Referenzbild verglichen, und die Korrelationen aller Behälter werden zusammen auf einem einzigen Bildschirm angezeigt.

All diesen Verfahren ist gemeinsam, dass in der Praxis vom mindestens einen optischen Sensor Druckereierzerignisse mit Fehlern und/oder Verschmutzungen erfasst werden, die bei einer nachfolgenden Bildverarbeitung vom Erkennungssystem als fehlerhafte Druckereierzeugnisse interpretiert werden. Der Weiterverarbeitungszyklus wird in der Folge unterbrochen oder die als fehlerhaft erachteten Druckereierzeugnisse vor deren weiteren Verarbeitung ausgeschleust werden. Bei näherer Betrachtung erweisen sich die vom Erkennungssystem als fehlerhaft erachteten Druckereierzeugnisse jedoch oft als fehlerfrei oder zumindest als tolerierbar, weshalb sie nach Möglichkeit in den Weiterverarbeitungsryklus zurückgespiesen werden, was oft manuell geschieht. Beide Varianten mindern die Wirtschaftlichkeit der Druckweiterverarbeitung in unerwünschter Weise.

Es ist deshalb eine Aufgabe der vorliegenden Erfindung, die Zuverlässigkeit der Erkennung von tatsächlich fehlerhaften Druckereierzeugnissen zu erhöhen.

Die der Erfindung für das Verfahren zugrunde liegende Aufgabe wird mit den Merkmalen des Patentanspruchs 1 gelöst. Weitere Ausführungsformen sind Gegenstand der abhängigen Patentansprüche 2 bis 9.

Beim erfindungsgemässen Verfahren zur Erkennung von Unregelmässigkeiten bei der Druckweiterverarbeitung von flächigen Druckereierzeugnissen werden diese mit einem Fördermittel entlang einer Förderstrecke an mindestens einem optischen Sensor vorbeigeführt. Der mindestens eine optische Sensor erzeugt aktuelle Bilder, welche die Druckereierzeugnisse und zumindest einen Ausschnitt des Fördermittels zeigen. Diese aktuellen Bilder bilden in einer Bildverarbeitungseinheit Istwerte. Diese Istwerte werden in der Bildverarbeitungseinheit mit mindestens einem vorgängig definierten Sollwert verglichen, worauf die Bildverarbeitungseinheit entsprechend einem Vergleichsergebnis des Vergleiches mindestens ein Signal erzeugt.

Unter Druckereierzeugnissen werden nachfolgend sowohl einzelne Druckereierzeugnisse, als auch Gruppen von mehreren Druckereierzeugnissen verstanden. Dabei umfassen die Druckereierzeugnisse mindestens je ein flächiges, flexibles Druckprodukt beziehungsweise Druckereiprodukt, welches wiederum ein Hauptprodukt und/oder mindestens ein Teilprodukt umfassen kann. Ebenso kann ein Druckereierzeugnis, oder können mehrere Druckereierzeugnisse und/oder ein Druckprodukt oder mehrere Druckprodukte oder eine Kombination daraus in einen Umschlag gesteckt sein. Weiter kann es sich beim Hauptprodukt und/oder beim Teilprodukt um Beilagen aller Art handeln, beispielsweise um ein Warenmuster.

Bei der Weiterverarbeitung von Druckereierzeugnissen treten zwangsläufig Verunreinigungen in Form von staubartigem Schmutz auf, welcher von verschiedenen Quellen stammt Eine erste Verschmutzungsquelle ist durch die Reibung bzw. den Abrieb von Elementen der Fördermittel wie Rollen oder Bändern und den Druckereierzeugnissen gebildet. Dabei handelt es sich insbesondere um Farbrückstände, welche am Fördermittel (beispielsweise einem Förderband), am Förderelement (beispielsweise an Greifern) und/oder an den Druckereierzeugnissen haften. Eine zweite Verschmutzungsquelle ist durch den Abrieb von benachbarten Druckereierzeugnissen gebildet, welche sich während der Weiterverarbeitung gegenseitig berühren, beispielsweise indem sie in einer Schuppenformation aufeinanderliegend gegeneinander verschoben werden. Eine weitere Schmutzquelle bildet der vorrichtungsseitige Abrieb, welcher beispielsweise durch Bandelemente gebildet ist, welche an einer Führungsleiste entlang schleifen. Noch eine weitere Verschmutzungsquelle bildet die Reibung bzw. der Abrieb von Elementen der Fördermittel, beispielsweise Rollen oder Bändern, welche mit Führungen, Kurvenbahnen und dergleichen zusammenwirken und/oder Verunreinigungen durch Schmiermittel, beispielsweise Ölflecke.

Unabhängig vom Verursacher setzt sich derartiger Schmutz sowohl auf ruhenden, wie auch auf bewegten Teilen ab und beeinflusst deren Eigenschaften, wie beispielsweise Gleitkoeffizienten in unerwünschter und schwer kontrollierbarer Weise.

Weitere Unregelmässigkeiten im Sinne der vorliegenden Erfindung werden beispielsweise durch Verunreinigungen der Fördermittel in Form von Schmiermittel- oder Druckerschwärze/Farbpigmentrückständen oder mindestens einen Defekt eines Fördermittels, beispielsweise in Form von Rissen, Löchern und/oder Schleifspuren eines Förderbandes oder Förderabteils gebildet. Unter dem Begriff Unregelmässigkeiten wird dabei auch die Kombination von zwei oder mehrerer solcher Störfaktoren verstanden. Das Verfahren ist gleichermassen dann einsetzbar, wenn lediglich ein Förderelement eines eine Vielzahl von Förderelementen aufweisenden Fördermittels im Aufnahmebereich des optischen Sensors von Unregelmässigkeiten betroffen ist.

Das Verfahren zeichnet sich dadurch aus, dass durch die Erfassung von aktuellen Bildern, welche die Druckereierzeugnisse und zumindest einen Ausschnitt des Fördermittels zeigen, Veränderungen des Fördermittels als solche erkannt werden und beim anschliessenden Vergleich des Istwertes mit dem Sollwert entsprechend berücksichtigt werden können. Die Bildverarbeitung erfolgt bei einem Beispiel in Echtzeit. Die Art der Unregelmässigkeit wird bei der vorliegenden Erfindung nicht weiter unterschieden. Mit dem Verfahren sind insgesamt weniger Produktionsunterbrüche bzw. Produktionsstörungen und damit eine verbesserte Wirtschaftlichkeit der Produktionsanlage erzielbar.

Das Verfahren ist vielseitig einsetzbar, beispielsweise um eine rechtzeitige Wartung eines stark verschmutzten Förderelementes des Fördermittels zu veranlassen oder um eine bei einer weiteren Bildverarbeitung störende Verschmutzung anlässlich einer Bildvorverarbeitung vorgängig zu entfernen, um die Verlässüchkeit der Identifikation von tatsächlich fehlerhaft positionierten und/oder falsch zusammengestellten Druckereierzeugnissen zu verbessern. Bei letzterem Fall sind tatsächlich fehlerhafte Druckereierzeugnisse mit gesteigerter Zuverlässigkeit als solche erkennbar und in einem weiteren Beispiel rechtzeitig aus dem Weiterverarbeitungsprozess ausscheidbar.

Soll mit dem Verfahren ein Verschmutzungsgrad des Fördermittels oder mindestens eines Förderelementes davon überwacht werden, so dient das mindestens eine Signal eine Entscheidungsgrundlage für eine nachfolgende Behandlung des Fördermittels. Dieser Entscheid wird beispielsweise in einer übergeordneten Regelung getroffen und erlaubt ein rechtzeitiges Einleiten von geeigneten Gegenmassnahmen, beispielsweise ein Ausschleusen von einzelnen, stark verschmutzten Greifern zwecks Reinigung, bevor eine gewisse Mindestqualität bei der Druckweiterverarbeitung nicht mehr gewährleistbar ist oder die ganze Verarbeitungsanlage oder ein Teil davon zwecks Reinigung in den Stillstand versetzt werden muss.

Bei einer weiteren Ausführungsform des Verfahrens erfolgt der Vergleich des Istwertes mit dem mindestens einen Sollwert nicht kontinuierlich, sondern lediglich periodisch, beispielsweise immer nach zehntausend weiterverarbeiteten Druckereierzeugnissen. Dazu ist die Bildverarbeitung entsprechend mit einer internen Zählfunktion ausgerüstet oder eine der Anzahl Druckereierzeugnissen entsprechende Laufnummer wird der Bildverarbeitungseinheit zugeführt. Damit ist die Datenmenge zusätzlich verringerbar.

Bei Bedarf ist der Sollwert und/oder das Ergebnis des Vergleiches durch die Bildverarbeitungseinheit auf ein entsprechend zugeordneten Förderelement des Fördermittels übertragbar, beispielsweise indem eine Schreibstation diese Informationen auf einem dem Förderelement zugeordneten oder einem im/am Förderelement angeordneten RFID-Transponder eines Förderelementes, beispielsweise eines Greifers überträgt.

Soll anlässlich einer weiteren Bildverarbeitung eine Kontur eines auf dem Fördermittel liegenden Druckereierzeugnisses anhand des Istwertes ermittelt werden, so ist eine konstante Qualität des Fördermittels erforderlich, um allfällige Konturabweichungen des Druckereierzeugnisses von einem zuvor festgelegten Sollwert feststellen zu können. Dabei bildet das Fördermittel vorzugsweise einen kontrastreichen Hintergrund für das Druckereierzeugnis. Aus den oben genannten Gründen ist es in der Praxis jedoch nicht möglich, eine konstante Qualität des Fördermittels zu garantieren, da Verschmutzungen, Verschleisserscheinungen und Defekte allesamt zu optisch erfassbaren Unregelmässigkeiten führen können, die vom optischen Sensor erfasst werden.

Ein digitalisiertes Bild umfasst typischerweise eine Vielzahl von Bildpunkten (Pixel). Die Unregelmässigkeiten werden dementsprechend ebenfalls durch Bildpunkte repräsentiert. Bei einem weiteren erfindungsgemässen Verfahren werden diejenigen Bildpunkte, welche eine Unregelmässigkeit repräsentieren, vorgängig zur weiteren Bildverarbeitung ausgeschlossen. Die weitere Bildverarbeitung kann beispielsweise eine Konturerkennung umfassen. Die ausgeschlossenen Bildpunkte werden vorzugsweise durch schwarze Bildpunkte ersetzt, wenn sich das erfasste Druckereierzeugnis vor einem standardmässig dunklen Hintergrund befindet. Dementsprechend werden die ausgeschlossenen Bildpunkte dabei vorzugsweise durch weisse Bildpunkte ersetzt, wenn sich das erfasste Druckereierzeugnis vor einem standardmässig hellen Hintergrund befindet. Letzteres hat insbesondere bei einem versuchsweisen Einsatz von Gegenlicht zur Verstärkung eines Kontrastes im Konturbereich der Druckereierzeugnisse zu guten Ergebnissen geführt.

Je nach Anwendung ist ein einzelner Bildpunkt jedoch nicht aussagekräftig genug, um mit ausreichender Signifikanz auf tatsächlich vorliegende Unregelmässigkeiten der Fördermittel zu schliessen. Anhand einer zusätzliche Bedingung, welche beispielsweise durch ein Vorhandensein einer ausreichend grossen Anzahl von eine Unregelmässigkeit repräsentierenden Bildpunkten in einem zusammenhängenden, benachbarten Gebiet gebildet ist, ist die Erkennungsquote der Identifikation von tatsächlich fehlerhaft positionierten und/oder falsch zusammengestellten Druckereierzeugnissen bei einer nachgeschalteten Bildverarbeitung zusätzlich steigerbar. In einer Ausführungsform der Erfindung wird mit einer Signifikanzeinheit die Anzahl der innerhalb eines vorgegebenen Bildausschnittes identifizierter Unregelmässigkeiten repräsentierenden Bildpunkte aufsummiert und beim Erreichen eines einstellbaren Schwellwertes ein entsprechendes Signal erzeugt, welches auf ein Vorhandensein einer tatsächlichen Unregelmässigkeit hin deutet. Hierzu werden beispielsweise beim Vorliegen eines eine potentielle Unregelmässigkeit repräsentierenden Bildpunktes dessen aktuelle Bildpunktkoordinaten mit den Koordinaten von vergangenen, eine Unregelmässigkeit repräsentierenden Bildpunkten verglichen und bei ausreichend kleinem Abstand eine Markierung als potentiell Unregelmässigkeiten aufweisendes Gebiet in einem Speicher abgelegt. Der Speicher und die Signifikanzeinheit sind bei einer Ausführungsform des Verfahrens in der Bildverarbeitungseinheit angeordnet. Tritt nun eine ausreichend grosse Anzahl von Treffern in diesem lokal begrenzten Bildausschnitt auf, so wird er als ein mit Unregelmässigkeiten behaftetes Gebiet protokolliert und markiert. Andernfalls wird das Gebiet als korrekt klassifiziert und bei der nachgeschalteten Bildverarbeitung dementsprechend behandelt. Durch eine derartige Vermeidung einer Falschklassifikation der Druckereierzeugnisse in der anschliessenden Bildverarbeitung, beispielsweise der Positionserkennung, ist die Wirtschaftlichkeit zusätzlich steigerbar.

Der Schwellwert für die Beurteilung der Signifikanz ist mit Vorteil geringer als eine vorgängig zum Produktionsbetrieb als unzulässig definierte Abweichung, da sie einen blinden Fleck auf dem aktuellen Bild definiert, dessen Inhalt von der weiteren Bildverarbeitung ausgeschlossen ist. Sonst besteht die Gefahr, dass nicht zuverlässig erkennbar ist, wenn ein Bestandteil des Druckereierzeugnisses über eine Kontur des Druckereierzeugnis hinausragt. In einem Anwendungsfall des Verfahrens entspricht der Schwellwert beispielsweise einem 2x2 Zentimeter grossen Bereich auf dem Druckereierzeugnis. Das zu kontrollierende Druckerzeugnis beinhaltet in diesem Beispiel lediglich ein Teilprodukt. Demnach sollte das Teilprodukt mehr als 2x2 Zentimeter messen, damit bei einer Kontrastbilderfassung durch den optischen Sensor und einem anschliessenden Konturvergleich mit einem Referenzbild eine zuverlässige Konturermittlung und damit eine zuverlässige Aussage über ein fehlerhaftes Druckereiprodukt gemacht werden können.

Je nach Bedarf sind über die Bildverarbeitungseinheit eine Erzeugung und/oder eine Ausgabe des Signals beim Überschreiten und/oder beim Unterschreiten einer Toleranzgrenze und/oder des Schwellwertes der Signifikanz veranlassbar. In einer Ausführungsform entspricht die Toleranzgrenze einer Maximalkontur, innerhalb welcher ein Druckereierzeugnis bei einem Konturvergleich noch als korrekt erachtet wird.

Der mindestens eine Sollwert wird bei einer Ausführungsform des Verfahrens beispielsweise vorgängig zum eigentlichen Produktionsbetrieb eingegeben, indem ein Bediener den Sollwert über ein Display der Vorrichtung zum Erkennen und/oder Anpassen von Unregelmässigkeiten bei der Druckweiterverarbeitung eingibt. Bei einer weiteren Ausführungsform wird der mindestens eine Sollwert aus einer Datenbibliothek abgerufen und in einem der Bildverarbeitungseinheit zugeordneten Speicher abgelegt. Die Datenbibliothek enthält je nach Ausführungsform manuell eingegebene und/oder aus einem Einrichtbetrieb und/oder aus dem Produktionsbetrieb gewonnene Sollwerte. Bei einer weiteren Ausführungsform repräsentiert der mindestens eine Sollwert mindestens ein Referenzbild, welches üblicherweise vorgängig zum eigentlichen Produktionsbetrieb über den optischen Sensor erfasst worden ist.

Bei einer Ausführungsform des Kontrollverfahrens bildet ein einem bestimmten Fördereiement zugeordnetes Referenzbild den Sollwert für den Vergleich aller aktuellen Bilder der Förderelemente, beispielsweise der Förderabteile. Falls jedem Förderelement des Fördermittels je ein Referenzbild zugeordnet ist, ist die Präzision der Klassifikation - das heisst, die Erkennung von tatsächlichen Unregelmässigkeiten - weiter verbesserbar.

Allen erfindungsgemässen Kontrollverfahren zur Erkennung von Unregelmässigkeiten bei der Druckweiterverarbeitung ist gemeinsam, dass von den Druckereierzeugnissen verdeckte Bereiche des Fördermittels beziehungsweise des mindestens einen Förderelementes nicht vom optischen Sensor erfasst und daher auch nicht von der Bildverarbeitungseinheit beim Vergleich mit dem mindestens einen Sollwert berücksichtigt werden. Bei der Erstellung eines Referenzbildes ist es nicht zwingend erforderlich, dass das entsprechende Förderelement, beispielsweise ein Förderabteil mit einer Auflagefläche, leer ist. Bei der Erfassung von Referenzbildern mit leeren Förderelementen können insbesondere in dem Fall, wo für jedes Förderelement ein Referenzbild erstellt wird, jedoch unproduktive Zeiten, wie sie beispielsweise beim Einstellbetrieb oder beim Beschleunigen der Vorrichtung für den Produktionsbetrieb auftreten, ideal zur Erfassung dieser Referenzbilder genutzt werden.

Viele Fördermittel weisen Antistatikelemente auf, wie etwa Antistatikdrähten bei Förderbändern. Die Antistatikelemente dienen zur Verhinderung oder zumindest zur Reduktion einer störenden Haftneigung zwischen den Druckereierzeugnissen und dem Fördermittel. Sie reduzieren insbesondere ein störendes Anhaften des unmittelbar mit dem Fördermittel in Kontakt stehenden Bestandteiles des Druckereierzeugnisses, wie beispielsweise einer Seite oder einem Umschlag an eine Oberfläche des Fördermittels. Im Fall von drahtförmigen Antistatikelementen bilden diese in Bildern des Fördermittels - beispielsweise von Förderabteilen - eine Unregelmässigkeit, welche in durchschnittlichen digitalisierten Bildern sichtbar sind. Im Sinn einer weiteren Bildvorverarbeitung zur Erleichterung einer nachgeschalteten Bildverarbeitung wie beispielsweise einer Positionserkennung und/oder einer Konturerkennung ist es je nach Bedarf sinnvoll, diese Antistatikelemente vor dieser weiteren Bildverarbeitung aus einem vom optischen Sensor erfassten Bild, beispielsweise einem kontrastreichen Schattenbild zu entfernen. Die Antistatikelemente beanspruchen eine gewisse Bildpunktanzahl, welche im Vergleich mit einer Gesamtzahl von Bildpunkten des ganzen Aufnahmebereichs des erfassten Bildes jedoch vergleichsweise gering ist. Dennoch beeinflusst diese gewisse Bildpunktanzahl ein Bildrauschen in unerwünschter Weise. In Tests zeigte sich, dass derartige, verhältnismässig kleine und/oder dünne Unregelmässigkeiten, welche zu den vergleichsweise geringen Mengen an Bildpunkten führen, rechnerisch problemlos aus dem aktuellen Bild entfernt werden dürfen, ohne dass dabei der Informationsgehalt für die nachfolgende Bildverarbeitung wesentlich darunter leidet. Die Entfernung solcher vernachlässigbarer Bildpunkte erfolgt im Rahmen einer Glättung. Bei der Glättung bleiben grobe Bildstrukturen erhalten und verhältnismässig kleine Unregelmässigkeiten werden herausgefiltert. In der Folge ist die Datenmenge eines geglätteten Bildes bei genügend guter Bildqualität für die nachfolgende Bildverarbeitung deutlich geringer, als jene eines ungeglätteten digitalisierten Bildes. Eine verringerte Datenmenge wirkt sich letztlich positiv auf die Verarbeitungsgeschwindigkeit der nachfolgenden Bildverarbeitung aus. Zur Glättung bieten sich elektronische Filter wie beispielsweise Gauss-Filter oder Median-Filter an. Bei der Anwendung der Median-Funktion wird beispielsweise ein Grauwert eines bestimmten Bildpunktes durch einen Median der Grauwerte der aktuellen Umgebung dieses bestimmten Bildpunktes ersetzt.

Je nach Bedarf ist die Glättungsfunktion vor oder nach dem Herausfiltern der Unregelmässigkeiten einsetzbar. Im Testbetrieb wurden gute Resultate erreicht, wenn die digitalisierten Schattenbilder im Rahmen einer Bildaufbereitung für eine nachfolgenden Bildverarbeitung in Form einer Konturerkennung die Median-Funktion einem Helligkeitsabgleich vorgeschaltet wurde.

Die als tatsächliche Unregelmässigkeiten identifizierten Unregelmässigkeit werden von einer nachgeschalteten Bildverarbeitung, beispielsweise einer Kantenerkennung, ausgeschlossen. Dazu werden die tatsächliche Unregelmässigkeiten in einer Ausführungsform des Verfahrens in einem dem effektiven Produktionsbetrieb vorangegangenen Einrichtbetrieb erlernt. Dabei werden alle optisch erkennbaren Unterschiede zwischen einem durch das erste Schattenbild gebildeten Idealbild und dem durch das zweite Schattenbild gebildete Referenzbild an denselben F/Y - Koordinaten als tatsächliche Unregelmässigkeiten interpretiert, sofern sie den Schwellwert der dazu erforderlichen Signifikanz überschritten.

In weiteren Ausführungsformen des Kontrollverfahrens wird die Zunahme der Unregelmässigkeiten des Fördermittels während dem Produktionsbetrieb je nach Anforderungen laufend oder periodisch überwacht, beispielsweise jeweils nach hunderttausend transportierten Druckereierzeugnissen. Falls die laufende Überwachung einen zuvor festgelegten Grenzwert an zulässigen Unregelmässigkeiten überschreitet, wird je nach Ausführungsform des Verfahrens ein Durchlauf aller zu diesem Zweck leeren Förderelemente zwecks Aufnahme neuer Referenzbilder durch den optischen Sensor durchgeführt. In der Folge ersetzen die neuen Referenzbilder die bis anhin zum Vergleich verwendeten Referenzbilder. In weiteren Ausführungsformen des Kontrollverfahrens ersetzen während dem Produktionsbetrieb erfasste Schattenbilder die entsprechenden Referenzbilder.

Die der Erfindung für die Vorrichtung zugrunde liegende Aufgabe wird mit den Merkmalen des Patentanspruchs 10 gelöst. Weitere Ausführungsformen sind Gegenstand der abhängigen Patentansprüche 11 und 12.

Die erfindungsgemässe Vorrichtung zur optischen Kontrolle von flächigen Druckereierzeugnissen weist Fördermittel zum Fördern der flächigen Druckereierzeugnissen, eine Digitalisiereinheit sowie eine Bildverarbeitungseinheit auf. Die Fördermittel sind derart angeordnet, dass die flächigen Druckereierzeugnisse damit entlang einer Förderstrecke am mindestens einen optischen Sensor vorbei transportierbar sind. Der optische Sensor ist über die Digitalisierungseinheit mit der Bildverarbeitungseinheit verbunden. Die Bildverarbeitungseinheit umfasst eine Vergleichsfunktion zum Vergleichen eines vom optischen Sensor erfassten und digitalisierten aktuellen Bildes mit mindestens einem Sollwert. Der Sollwert ist je nach Bedarf in einem Speicher abgelegt oder wird dazu erzeugt. Anhand des Ergebnisses des Vergleichs sind Unregelmässigkeiten des Fördermittels als solche erkennbar und können bei einer darauf folgenden Bildverarbeitung entsprechend berücksichtigt werden. Falls die darauf folgende Bildverarbeitung beispielsweise eine Konturerfassung und ein Vergleich mit einer vorgängig definierten zulässigen Lageposition ist, sind fehlerhafte Druckereierzeugnisse, welche die zulässige Lageposition überschreiten, zuverlässig von korrekten Druckereierzeugnissen unterscheidbar.

In einer weiteren Ausführungsform der Vorrichtung ist die Bildverarbeitungseinheit mit einer Datenbibliothek verbunden.

Die Bildverarbeitungseinheit ist je nach Bedarf zur Ausgabe eines Signals mit einem Kommunikationsmittel verbunden.

Anhand von Figuren, welche lediglich Ausführungsbeispiele darstellen, wird die Erfindung im Folgenden erläutert. Es zeigen
- Fig.1: eine vereinfachte Darstellung einer ersten Ausführungsform der erfindungsgemässen Vorrichtung mit einem korrekt positionierten Druckereierzeugnis und einem fehlerhaft positionierten Druckerzeugnis in Seitenansicht;
- Fig.2: eine vereinfachte Darstellung der in Figur 1 gezeigten Vorrichtung in einer Ansicht von oben;
- Fig.3: ein erstes Schattenbild, welchem ein nicht mit Unregelmässigkeiten behaftetes Förderelement eines Fördermittels zugrunde liegt;
- Fig. 4: ein zweites Schattenbild, welchem ein mit Unregelmässigkeiten behaftetes Förderelement eines Fördermittels zugrunde liegt;
- Fig. 5: eine bildliche Darstellung einer Bildvorverarbeitung des zweiten Schattenbildes; und
- Fig. 6: eine bildliche Darstellung einer weiteren Bildvorverarbeitung des in Figur 1 gezeigten ersten Schattenbildes.

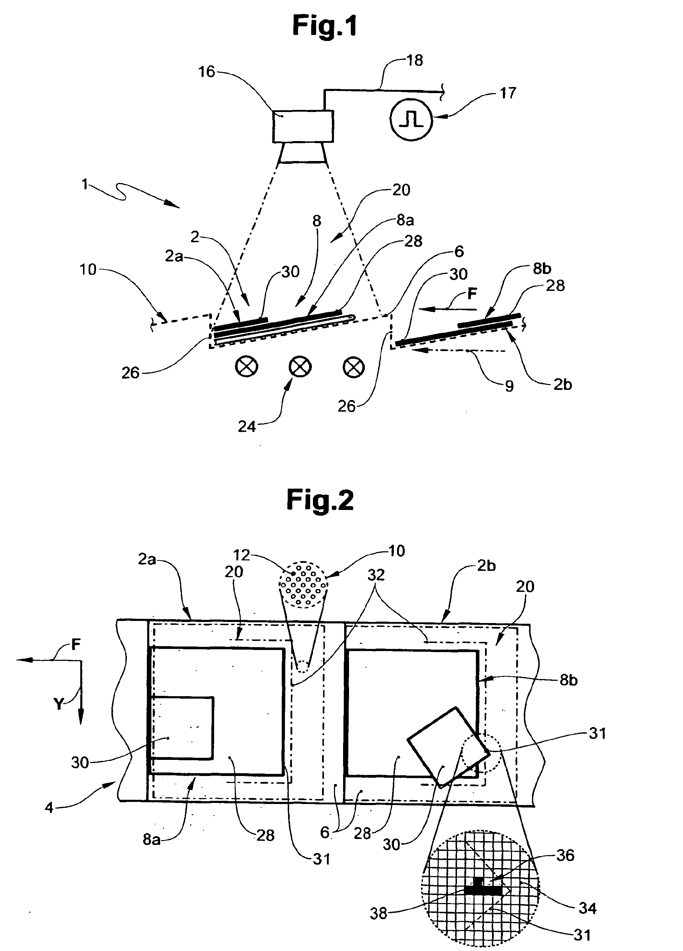

Die **Figur 1** zeigt in Zusammenschau mit der **Figur 2** einen Ausschnitt einer efindungsgemässen Vorrichtung 1, wie sie in der gleichentags eingereichten Patentanmeldung CH 00766/08 derselben Anmelderin mit dem Titel Optische Positionserkennung" detaillierter beschrieben ist. In der Figur 1 ist lediglich eines der Förderelemente 2 in Form eines Förderabteils 2 eines Fördermittels 4 in Seitenansicht ganz sichtbar dargestellt. Das Förderabteil 2 weist eine Auflagefläche 6 zur Entgegennahme mindestens eines flächigen Druckereierzeugnisses 8 aus einer Mehrzahl von Druckerzeugnissen 8 auf und dient zum Transport der Druckereierzeugnisse 8 in eine Förderrichtung F entlang einer Förderstrecke 9. Die Auflageflächen 6 sind in der vorliegenden Ausführungsform aus je einem Textilabschnitt gebildet und lichtdurchlässig beziehungsweise transluzent. Die Lichtdurchlässigkeit ist durch eine regelmässige Perforation 10 erhöht und daher sind die Auflageflächen 6 in Figur 1 vereinfacht mit gepunkteten Linien dargestellt, während sie in Figur 2 der besseren Übersichtlichkeit halber lediglich in einer Ausschnittvergrösserung perforiert dargestellt sind. Ein Förderabteil 2, 2a misst in der in Figur 1 und 2 gezeigten Lage in Förderrichtung F ungefähr 400 mm und quer zur Förderrichtung F, also in Richtung Y ungefähr 500 mm. Die Perforation 10 ist dabei lochblechförmig, das heisst mit jeweils um 40 mm diagonal zur Förderrichtung F gegeneinander versetzten Lochreihen ausgebildet, wobei ein stellvertretendes Loch 12 einen runden Querschnitt mit einem Durchmesser von 8 mm aufweist.

Oberhalb des Fördermittels 4 ist zur Erfassung eines Schattenbildes 14 ein optischer Sensor 16 angeordnet, welcher zur Übertragung mindestens eines Signals 17 zu Kommunikationszwecken mit einer Signalleitung 18 verbunden ist. Im Versuchsbetrieb wurde ein sogenannter Low-Cost Vision Sensor mit einem M12-Objektiv mit acht Millimetern Brennweite als optischer Sensor 16 eingesetzt. Die Verarbeitung der Schattenbilder erfolgte dabei mit einem "embedded digital signal Processor" vom Typ Blackfin ADSP mit 1000MMACS (nicht gezeigt), welcher über eine (ebenfalls nicht gezeigte) Eingabe-/Ausgabeschnittstelle (I/O-Schnittstelle) mit einem Leitsystem (ebenfalls nicht gezeigt) verbunden ist. Die Bilderfassung des optischen Sensors 16 erfolgt entsprechend dem Maschinentakt, also dem Fördertakt der Förderabteile 2, 2a des Fördermittels 4 in der Förderrichtung F.

Der optische Sensor 16 weist einen bestimmten Aufnahmebereich 20 auf, welcher in Förderrichtung F und Querrichtung Y ein aktuelles Bild beschränkt.

Gegenüber dem optischen Sensor 16 ist unterhalb des Fördermittels 4 ein durch drei Leuchtstoffröhren gebildetes Leuchtmittel 24 angebracht. Beim Versuchsbetrieb dienten drei konstant leuchtende 36-Watt-Leuchtstoffröhren mit elektronischem Vorschaltgerät als Leuchtmittel 24. Das Leuchtmittel 24 bildet eine Kontrastlichtquelle für die Erzeugung von Schattenbildern.

Das Förderelement/Förderabteil 2, 2a weist je eine in Seitenansicht gesehen in Förderrichtung F abfallend geneigte Auflagefläche 6 auf, welche in Förderrichtung F durch einen Wandabschnitt 26 begrenzt ist. Die Neigung ist vorteilhaft, da sie ein Anliegen der Druckereierzeugnisse 8 am Wandabschnitt 26 begünstigt und dadurch einen Anschlag für die Druckereierzeugnisse 8 bildet. Dadurch wird eine gewisse Lagestabilität der Druckereierzeugnisse 8 relativ zum Förderabteil begünstigt. In Figur 1 und 2 liegt auf den Auflageflächen 6 des Förderabteils 2, 2a jeweils ein Druckereierzeugnis 8 bestehend aus je einem ersten Teilprodukt 28, auf welchem je ein zweites Teilprodukt 30 angeordnet ist. Im ersten, in Figur 2 links liegenden Förderabteil 2 liegen die Teilprodukte 28, 30 am Wandabschnitt 26 an und bilden ein korrektes Druckereierzeugnis 8a. Unter korrektem Druckereierzeugnis 8a wir ein korrekt zusammengestelltes und bezüglich dem Förderabteil 2 und bezüglich der Teilprodukte 28, 30 korrekt zueinander ausgerichtetes Druckereierzeugnis verstanden. Im zweiten, in Figur 2 rechts liegenden Förderabteil 2b liegt ein von der Zusammensetzung her zwar korrekt zusammengestelltes Druckereierzeugnis, dessen erstes Teilprodukt 28 und zweites Teilprodukt 30 jedoch in unerwünschter Weise gegeneinander verschoben sind, wobei lediglich das erste Teilprodukt 28 am Wandabschnitt 26 anliegt. Deshalb wird dieses Druckereierzeugnis 8b nachfolgend vereinfachend fehlerhaftes Druckereierzeugnis 8b genannt. Der Fachmann sieht, dass auch andere Fehlerkonstellationen, beispielsweise ein in Querrichtung Y verschobenes Teilprodukt und/oder ein einen unregelmässigen Kantenverlauf aufweisendes erstes und/oder zweites Teilprodukt etc. möglich und entsprechend behandelbar sind.

Da im vorliegenden Fall eine Kontrolle der Lageposition der Druckereierzeugnisse 8a, 8b relativ zu den Förderabteilen 2, 2a vorgenommen soll, müssen die Druckereierzeugnisse 8a, 8b sowohl in Förderrichtung F, als auch in Querrichtung Y kleiner als die Auflagefläche 6 sein, damit der optische Sensor 16 kontrastreiche, eine Kontur 31 der Druckereierzeugnisse 8a, 8b repräsentierende Schattenbilder erfassen kann. Im Versuchsbetrieb wurden mit grössten zu verarbeitenden Druckereierzeugnissen 8 im DIN-A3- Format gute Werte erzielt.

Vorgängig zum eigentlichen Produktionsbetrieb wurden in Tests gute Werte für eine zuverlässige Erkennung von tatsächlichen Unregelmässigkeiten an den Förderelementen 2, 2b erzielt, wenn der Schwellwert zur Bildung einer Signifikanz bevorzugte, im Folgenden beschriebene Kennwerte aufwies. Da im konkreten Fall ein Umriss beziehungsweise eine Gesamtkontur 31 eines jeden Druckereierzeugnisses 8, 8a, 8b für eine in Förderrichtung F nachgeschaltete Folieranlage ein wichtiges Kriterium bildet, wurde eine Toleranzgrenze 32 aufgrund eines zuvor ermittelten, optimalen Referenzdruckerzeugnisses generiert. Die Toleranzgrenze 32 hat die Form einer Kontur 31 eines korrekten Druckereierzeugnisses, ist jedoch bezüglich ihrer Dimensionen grösser, um geringfügige Positionsabweichungen von einer Idealposition zu tolerieren. Im Versuchsbetrieb sind bei Druckereierzeugnissen im Format DIN-A3 und Toleranzbereichen ΔF beziehungsweise ΔY von wenigen Millimetern zwischen der Kontur eines optimalen Referenzdruckerzeugnisses zur Toleranzgrenze 32 gute Resultate erzielt worden. Die Grösse des Toleranzbereichs ΔF beziehungsweise ΔY variiert je nach Bedarf und wird beispielsweise durch die Erfordernisse einer flussabwärts gesehen nachgeschalteten Weiterbearbeitungsstation definiert. Zum besseren Verständnis der Funktion des Schwellwertes zur Bildung einer Signifikanz sei nachfolgend auf ein illustratives Beispiel eines digitalisierten aktuellen Bildes verwiesen, dessen ΔF beziehungsweise ΔY-Toleranzbereich 5 mm misst. Diese 5 mm entsprechen dabei fünf Bildpunkten 34 des aktuellen Bildes, wobei der Schwellwert auf ein zusammenhängendes Gebiet 36 von mindestens fünf Bildpunkten 34 festgelegt wurde und diese fünf Bildpunkte 34 überdies mindestens auf zwei Pixelreihen oder Pixelspalten aufgeteilt sein müssen.

In einer Signifikanzeinheit, welches in einer Bildverarbeitungseinheit angeordnet ist, wird die Anzahl der innerhalb des vorgegebenen Aufnahmebereiches 20 identifizierter Unregelmässigkeiten repräsentierenden Bildpunkte 38 summiert. Die Unregelmässigkeit wird bei einer weiteren Bildverarbeitung lediglich dann als solche berücksichtigt, wenn sie den Schwellwert von fünf Bildpunkten überschreitet und vom Druckereierzeugnis 8 nicht verdeckt ist.

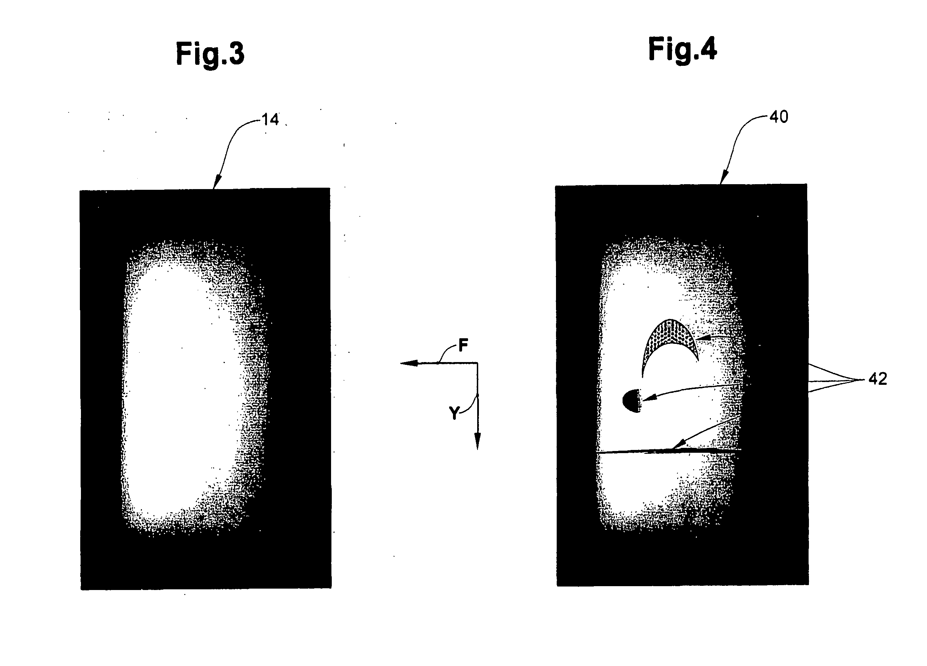

Die **Figur 3** zeigt ein erstes Schattenbild, 14, welchem ein nicht mit Unregelmässigkeiten behaftetes Förderabteil eines Fördermittels ohne ein Druckereierzeugnis zugrunde liegt, wobei das Förderabteil im Unterschied zum in Figur 1 und 2 gezeigten Förderabteil nicht perforiert, sondern lediglich lichtdurchlässig ist.

Die **Figur 4** zeigt ein zweites Schattenbild 40 ähnlich dem ersten Schattenbild der Figur 3, wobei im Unterschied zum idealen Förderabteil das dem zweiten Schattenbild 40 zugrunde liegende, ausschnittweise gezeigte Förderabteil Unregelmässigkeiten 42 in Form von zu Testzwecken künstlich erzeugten Verschmutzungen aufweist.

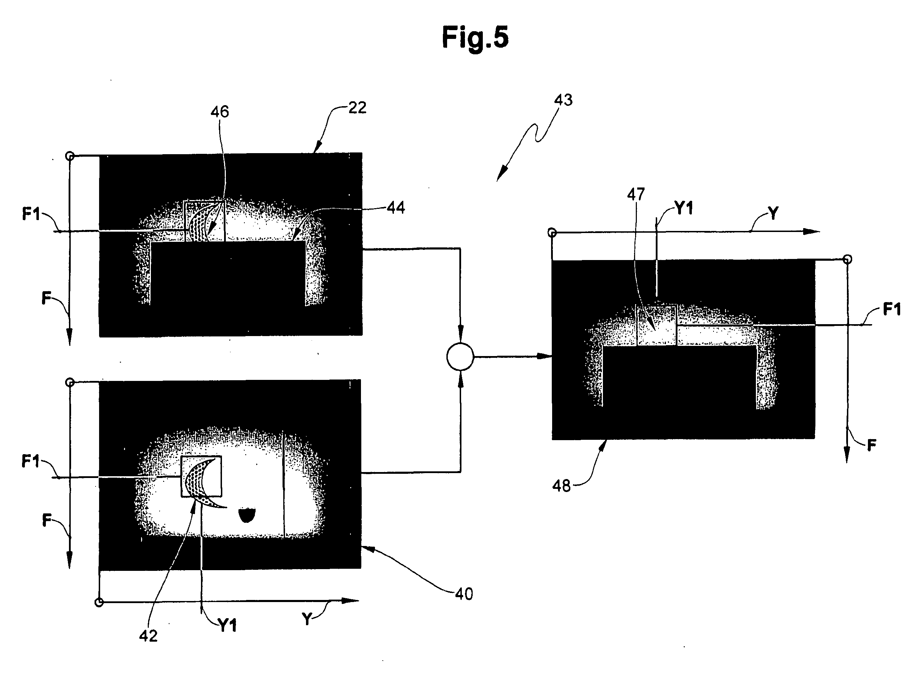

Anhand der **Figur 5** wird die Wirkungsweise einer Bildvorverarbeitung 43 im Sinne der Erfindung erklärt. Als Basis für die Bildvorverarbeitung 43 dient ein Referenzbild, welches dem in Figur 4 gezeigten zweiten Schattenbild 40 entspricht. Das aktuelle Bild 22 entspricht einem dritten Schattenbild, welches auf dem zweiten Schattenbild 40 basiert, jedoch einen schwarzen, einem entsprechenden Druckereierzeugnis zugeordneten, rechteckförmigen Bereich 44 aufweist. In der Bildverarbeitungseinheit bildet das Referenzbild einen Sollwert und das aktuelle Bild 22 einen Istwert. Durch den Vergleich des Istwertes mit dem Sollwert ist beispielsweise eine potentielle Unregelmässigkeit 46 an den Koordinaten F1, Y1 im aktuellen Bild 22 als tatsächliche Unregelmässigkeit 42 des Förderelementes an der Koordinate F1, Y1 ermittelbar, da diese Unregelmässigkeit 42 in einem vorangegangenen Einrichtbetrieb erlernt worden ist. Die stellvertretend für eine Vielzahl von Unregelmässigkeiten genannte tatsächliche Unregelmässigkeit 42 wurde von der Vorrichtung in einem dem nun erläuterten Produktionsbetrieb vorangegangenen Einrichtbetrieb erlernt. Dazu wurden alle optisch erkennbaren Unterschiede zwischen einem durch das erste Schattenbild gebildeten Idealbild und dem durch das zweite Schattenbild gebildete Referenzbild 40 an denselben F/Y - Koordinaten als tatsächliche Unregelmässigkeiten 42 interpretiert, sofern sie den Schwellwert der dazu erforderlichen Signifikanz überschritten. Im vorliegenden Fall wurde dazu für jedes Förderelement je ein Idealbild und ein Referenzbild erzeugt, damit besonders zuverlässige Erkennungswerte erzielt werden konnten. Die Idealbilder und die Referenzbilder sind dazu im Testbetrieb mit einer dem jeweiligen Förderabteil 2, 2a zugeordneten Laufnummer in einem von der Bildverarbeitungseinheit zugreifbaren Speicher abgelegt worden. Da im vorliegenden Fall die potentielle Verunreinigung 46 als tatsächliche Verunreinigung 42 erkannt worden ist, wird sie von einer weiteren Bildverarbeitung wie zum Beispiel einer nachgeschalteten Konturerkennung ausgeschlossen. Dies erfolgt im vorliegenden Fall dadurch, dass die als signifikant erachteten, tatsächlichen Unregelmässigkeiten/ Verunreinigungen 42 mit den Koordinaten F1, Y1 als weisse, sogenannt blinde Zone 47 an den entsprechenden Koordinaten F1, Y1 in einem Zwischenergebnis in Form eines vierten Schattenbildes 48 dargestellt werden.

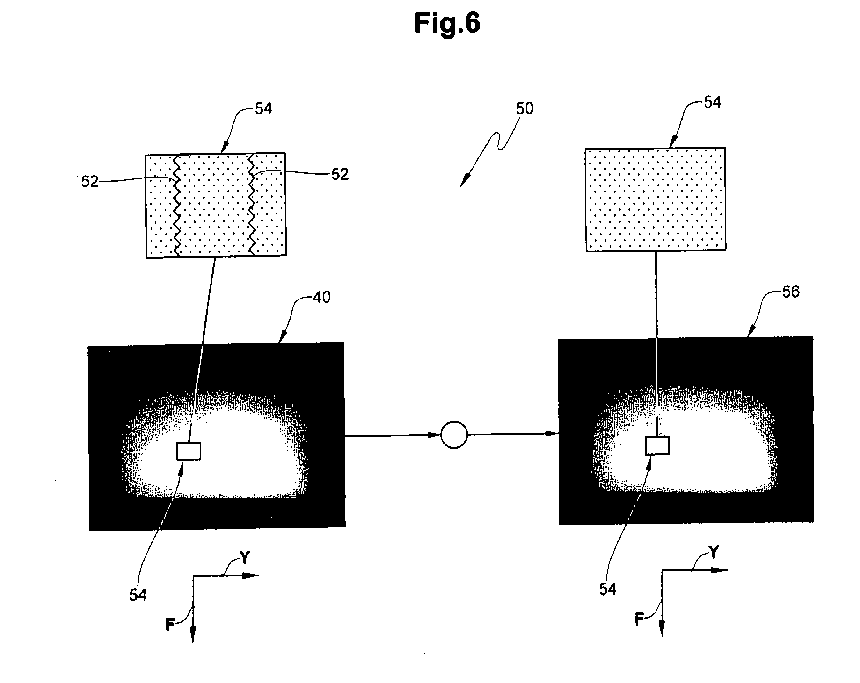

Anhand der **Figur 6** wird eine weitere Bildvorverarbeitung 50 erläutert. Im vorliegenden Fall weist jedes Förderabteil eine Vielzahl von verhältnismässig dünnen drahtförmigen Antistatikelementen 52 auf. Diese werden zwar vom optischen Sensor erkannt sind bezüglich einer Entscheidung auf ein Vorhandensein von Unregelmässigkeiten wie Schmutz oder Rissen des Förderabteils jedoch aufgrund ihrer verhältnismässig dünnen drahtförmigen Geometrie vernachlässigbar. Deshalb wird die Darstellung der Antistatikelemente 52 als Störgrösse und nicht als Unregelmässigkeit im Sinn der Erfindung verstanden. Im vorliegenden Fall werden die Antistatikdrähte 52 in einem beliebig ausgewählten Bildausschnitt 54 des digitalisierten Bildes von einer gewissen Bildpunktanzahl dargestellt. Die Gesamtmenge von Bildpunkten eines jeden Bildes innerhalb des ganzen Aufnahmebereiches bildet eine Gesamtzahl von Bildpunkten. Da die gewisse Bildpunktanzahl im Verhältnis zur Gesamtzahl von Bildpunkten eine vergleichsweise vernachlässigbare Menge an Bildinformationen enthält, werden die die Unregelmässigkeiten zeigenden Bildpunkte mit einer Median-Funktion rechnerisch aus dem aktuellen Bild entfernt und so von einer nachfolgenden Bildverarbeitung ausgeschlossen. Dementsprechend sind die Antistatikdrähte 52 im fünften Schattenbild 56 nicht mehr enthalten.

Im Testbetrieb wurde trotz der rechnerischen Entfernung der Antikstatikelemente 52 aus dem zweiten Schattenbild 40 beziehungsweise dem dritten Schattenbild vor der Erzeugung des vierten Schattenbildes 48 eine zuverlässige Erkennung von fehlerhaften Druckereierzeugnissen erzielt. Die Durchführung der Median-Funktion erfolgte ebenfalls in der Bildverarbeitungseinheit, welche dem optischen Sensor zugeordnet oder in diesem enthalten war.

### Bezugszeichenliste

- 1,: Vorrichtung
- 2, 2a, 2b: Förderelement, Förderabteil
- 4: Fördermittel
- 6: Auflagefläche
- 8, 8a, 8b: Druckereierzeugnis
- 9: Förderstrecke
- 10: Perforation
- 12: Loch
- 14: erstes Schattenbild, Idealbild
- 16: optischer Sensor
- 17: Signal
- 18: Kommunikationsleitung, Signalleitung
- 20: Aufnahmebereich
- 22: aktuelles Bild, drittes Schattenbild
- 24: Leuchtmittel
- 26: Wandabschnitt
- 28: erstes Teilprodukt
- 30: zweites Teilprodukt
- 31: Kontur eines Druckereierzeugnisses
- 32: Toleranzgrenze
- 34: Bildpunkt
- 36: zusammenhängendes Gebiet
- 38: Unregelmässigkeit repräsentierender Bildpunkt
- 40: zweites Schattenbild, Referenzbild
- 42: tatsächliche Unregelmässigkeit
- 43: Bildvonrerarbeitung
- 44: rechteckförmiger Bereich
- 46: potentielle Unregelmässigkeit
- 47: weisse, blinde Zone
- 48: viertes Schattenbild
- 50: weitere Bildvorverarbeitung
- 52: Antistatikelement
- 54: Bildausschnitt
- 56: fünftes Schattenbild

## Patentansprüche

1. Optisches Kontrollverfahren zur Anwendung in der Druckweiterverarbeitung von flächigen Druckereierzeugnissen (8, 8a, 8b), bei welchem die flächigen Druckereierzeugnisse (8, 8a, 8b) mit einem Fördermittel (4) entlang einer Förderstrecke (9) an mindestens einem optischen Sensor (16) vorbeigeführt werden, der optische Sensor (16) aktuelle Bilder (22) erfasst, welche in einer Bildverarbeitungseinheit Istwerte bilden, die Istwerte in der Bildverarbeitungseinheit mit mindestens einem vorgängig definierten Sollwert verglichen werden und die Bildverarbeitungseinheit entsprechend einem Vergleichsergebnis mindestens ein Signal (17) erzeugt,
**dadurch gekennzeichnet, dass**
die aktuellen Bilder (22) zumindest Ausschnitte des Fördermittels (4) zeigen, die Unregelmässigkeiten (42) aufweisen, die Unregelmässigkeiten (42) als solche erkannt werden und mindestens einem Förderelement (2, 2a, 2b) des Fördermittels (4) zugeordnet werden und die Bildverarbeitungseinheit Bildpunkte von digitalisierten aktuellen Bildern (22), welche im Vergleich zum mindestens einen Sollwert mindestens eine Unregelmässigkeit (42) repräsentieren, vor einer weiteren Bildverarbeitung ausschliesst.

2. Verfahren gemäss Anspruch 1, **dadurch gekennzeichnet, dass** der Vergleich des Istwertes mit dem Sollwert periodisch durchgeführt wird.

3. Verfahren gemäss Anspruch 1 oder 2, **dadurch gekennzeichnet, dass** beim Überschreiten und/oder Unterschreiten mindestens eines Schwellwertes beim Vergleich das mindestens eine Signal (17) erzeugt wird.

4. Verfahren gemäss Anspruch 3, **dadurch gekennzeichnet, dass** das mindestens eine Signal (17) als Entscheidungsgrundlage für eine nachfolgende Behandlung des mindestens einen Förderelementes (2, 2a, 2b) oder des Fördermittels (4) dient.

5. Verfahren gemäss Anspruch 3 oder 4, **dadurch gekennzeichnet, dass** der mindestens eine Schwellwert durch eine vordefinierte Mindestanzahl von Bildpunkten gebildet ist.

6. Verfahren gemäss einem der Ansprüche 1 bis 5, **dadurch gekennzeichnet, dass** der Sollwert vorgängig zu einem Produktionsbetrieb eingegeben, aus einer Datenbibliothek abgerufen oder aufgrund mindestens eines vorgängig durch den optischen Sensor (16) erfassten Referenzbildes (40) gebildet wird.

7. Verfahren gemäss Anspruch 6, **dadurch gekennzeichnet, dass** jedem Förderelement (2, 2a, 2b) je ein Referenzbild (40) zugeordnet ist.

8. Verfahren gemäss Anspruch 6 oder 7, **dadurch gekennzeichnet, dass** das Referenzbild (40) keine Druckereierzeugnisse (8, 8a, 8b) zeigt.

9. Verfahren gemäss Anspruch 5, **dadurch gekennzeichnet, dass** vorgängig zum Vergleich der Istwerte mit dem mindestens einen Sollwert vom optischen Sensor (16) erfasste Unregelmässigkeiten (42) welche von einer gewissen Bildpunktanzahl repräsentiert werden, mit einer Funktion elektronisch aus dem aktuellen Bild (22) entfernt werden, sofern diese Bildpunktanzahl geringer als der Schwellwert ist und/oder ein bestimmtes, vorgängig definierbares Verhältnis zur Gesamtanzahl von Bildpunkten des digitalisierten Bildes unterschreitet.

10. Vorrichtung zur optischen Kontrolle von flächigen Druckereierzeugnissen (8, 8a, 8b), wobei die Vorrichtung Fördermittel (4) zum Fördern der flächigen Druckereierzeugnissen (8, 8a, 8b), eine Digitalisiereinheit sowie eine Bildverarbeitungseinheit aufweist und wobei die Fördermittel (4) derart angeordnet sind, dass die flächigen Druckereierzeugnisse (8, 8a, 8b) entlang einer Förderstrecke (9) am mindestens einen optischen Sensor (16) vorbei transportierbar sind, der optische Sensor (16) über die Digitalisierungseinheit mit der Bildverarbeitungseinheit verbunden ist und die Bildverarbeitungseinheit eine Vergleichsfunktion zum Vergleichen eines vom optischen Sensor erfassten und digitalisierten aktuellen Bildes (22) mit mindestens einem in einem Speicher abgelegten Sollwert aufweist,
**dadurch gekennzeichnet, dass**
der optische Sensor (16) zum Erfassen von aktuellen Bildern (22) eingerichtet ist, die zumindest Ausschnitte des Fördermittels (4) zeigen, die Unregelmässigkeiten (42) aufweisen, und die Bildverarbeitungseinheit dazu eingerichtet ist, Unregelmässigkeiten (42) des Fördermittels (4) als solche zu erkennen und mindestens einem Förderelement (2, 2a, 2b) des Fördermittels (4) zuzuordnen und Bildpunkte von digitalisierten aktuellen Bildern (22), welche im Vergleich zum mindestens einen Sollwert mindestens eine Unregelmässigkeit (42) repräsentieren, vor einer weiteren Bildverarbeitung auszuschliessen.

11. Vorrichtung gemäss Anspruch 10, **dadurch gekennzeichnet, dass** die Bildverarbeitungseinheit mit einer Datenbibliothek verbunden ist.

12. Vorrichtung gemäss Anspruch 10 oder 11, **dadurch gekennzeichnet, dass** die Bildverarbeitungseinheit zur Ausgabe eines Signals (17) mit einem Kommunikationsmittel verbunden ist.

## Claims

1. Optical control method for application in the post press processing of flat print shop products (8, 8a, 8b), in which the flat print shop products (8, 8a, 8b) are led by a conveying means (4) along a conveying path (9) past at least one optical sensor (16), the optical sensor (16) registers current images (22) which form actual values in an image processing unit, the actual values are compared in the image processing unit with at least one previously defined reference value, and the image processing unit generates at least one signal (17) in accordance with a comparison result,
**characterized in that**
the current images (22) show at least portions of the conveying means (4) which have irregularities (42), the irregularities (42) are detected as such and are assigned to at least one conveying element (2, 2a, 2b) of the conveying means (4), and the image processing unit excludes from further image processing pixels from digitized current images (22) which, as compared with at least one reference value, represent at least one irregularity (42).

2. Method according to Claim 1, **characterized in that** the comparison of the actual value with the reference value is carried out periodically.

3. Method according to Claim 1 or 2, **characterized in that** the at least one signal (17) is generated when exceeding and/or falling below at least one threshold value during the comparison.

4. Method according to Claim 3, **characterized in that** the at least one signal (17) is used as a basis for deciding about subsequent treatment of the at least one conveying element (2, 2a, 2b) or of the conveying means (4).

5. Method according to Claim 3 or 4, **characterized in that** the at least one threshold value is formed by a predefined minimum number of pixels.

6. Method according to one of Claims 1 to 5, **characterized in that** the reference value is entered prior to production operation, is called up from a data library or is formed on the basis of at least one reference image (40) previously registered by the optical sensor (16).

7. Method according to Claim 6, **characterized in that** each conveying element (2, 2a, 2b) is assigned a reference image (40).

8. Method according to Claim 6 or 7, **characterized in that** the reference image (40) does not show any print shop products (8, 8a, 8b).

9. Method according to Claim 5, **characterized in that**, prior to the comparison of the actual values with the at least one reference value, irregularities (42) registered by the optical sensor (16), which are represented by a certain number of pixels, are removed electronically from the current image (22) with a function if this number of pixels is lower than the threshold value and/or falls below a specific, previously definable ratio to the total number of pixels of the digitized image.

10. Apparatus for the optical control of flat print shop products (8, 8a, 8b), the apparatus having conveying means (4) for conveying the flat print shop products (8, 8a, 8b), a digitizing unit and an image processing unit, and the conveying means (4) being arranged in such a way that the flat print shop products (8, 8a, 8b) can be transported along a conveying path (9) past at least one optical sensor (16), the optical sensor (16) being connected to the image processing unit via the digitizing unit, and the image processing unit having a comparison function for comparing a digitized current image (22) registered by the optical sensor with at least one reference value stored in a memory,
**characterized in that**
the optical sensor (16) is set up to register current images (22) which show at least portions of the conveying means (4) which have irregularities (42), and the image processing unit is set up to detect irregularities (42) of the conveying means (4) as such and to assign them to at least one conveying element (2, 2a, 2b) of the conveying means (4) and to exclude from further image processing pixels from digitized current images (22) which, as compared with the at least one reference value, represent at least one irregularity (42).

11. Apparatus according to Claim 10, **characterized in that** the image processing unit is connected to a data library.

12. Apparatus according to Claim 10 or 11, **characterized in that** the image processing unit is connected to a communication means for the output of a signal (17).

## Revendications

1. Procédé de contrôle optique destiné à être utilisé dans le post-traitement d'impression de produits d'imprimerie plats (8, 8a, 8b), selon lequel les produits d'imprimerie plats (8, 8a, 8b) sont acheminés par des moyens de transport (4) le long d'un trajet de transport (9) devant au moins un capteur optique (16), le capteur optique (16) détecte des images actuelles (22), lesquelles forment des valeurs effectives dans une unité de traitement d'image, les valeurs effectives sont comparées dans l'unité de traitement d'image avec au moins une valeur de consigne préalablement définie et l'unité de traitement d'image génère au moins un signal (17) conformément à un résultat de la comparaison,
**caractérisé en ce que**
les images actuelles (22) représentent au moins des portions des moyens de transport (4) qui présentent des irrégularités (42), les irrégularités (42) sont reconnues en tant que telles et sont associées à au moins un élément de transport (2, 2a, 2b) des moyens de transport (4) et l'unité de traitement d'image exclut d'un traitement d'image postérieur les pixels des images actuelles (22) numérisées qui, en comparaison d'au moins une valeur de consigne, représentent au moins une irrégularité (42).

2. Procédé selon la revendication 1, **caractérisé en ce que** la comparaison entre la valeur effective et la valeur de consigne est effectuée périodiquement.

3. Procédé selon la revendication 1 ou 2, **caractérisé en ce qu'**au moins un signal (17) est généré en cas de franchissement vers le haut et/ou vers le bas d'au moins une valeur de seuil lors de la comparaison.

4. Procédé selon la revendication 3, **caractérisé en ce que** l'au moins un signal (17) sert de base de décision pour une gestion à suivre de l'au moins un élément de transport (2, 2a, 2b) ou des moyens de transport (4).

5. Procédé selon la revendication 3 ou 4, **caractérisé en ce que** l'au moins une valeur de seuil est formée par un nombre minimum prédéfini de pixels.

6. Procédé selon l'une des revendications 1 à 5, **caractérisé en ce que** préalablement à un fonctionnement en production, la valeur de seuil est saisie, chargée à partir d'une bibliothèque de données ou formée en se basant au moins sur une image de référence (40) acquise précédemment par le capteur optique (16).

7. Procédé selon la revendication 6, **caractérisé en ce qu'**une image de référence (40) est à chaque fois associée à chaque élément de transport (2, 2a, 2b).

8. Procédé selon la revendication 6 ou 7, **caractérisé en ce que** l'image de référence (40) ne représente pas de produits d'imprimerie (8, 8a, 8b).

9. Procédé selon la revendication 5, **caractérisé en ce qu'**avant la comparaison des valeurs effectives avec l'au moins une valeur de consigne, les irrégularités (42) détectées par le capteur optique (16), lesquelles sont représentées par un nombre donné de pixels, sont éliminées de l'image actuelle (22) par une fonction électronique dans la mesure où ce nombre de pixels est inférieur à la valeur de seuil et/ou est inférieur à un rapport à définir préalablement au nombre total de pixels de l'image numérisée.

10. Dispositif de contrôle optique de produits d'imprimerie plats (8, 8a, 8b), le dispositif présentant des moyens de transport (4) pour transporter les produits d'imprimerie plats (8, 8a, 8b), une unité de numérisation ainsi qu'une unité de traitement d'image et les moyens de transport (4) étant disposés de telle sorte que les produits d'imprimerie plats (8, 8a, 8b) peuvent être transportés le long d'un trajet de transport (9) devant au moins un capteur optique (16), le capteur optique (16) étant relié avec l'unité de traitement d'image par le biais de l'unité de numérisation et l'unité de traitement d'image présentant une fonction de comparaison pour comparer une image actuelle (22) acquise par le capteur optique et numérisée avec au moins une valeur de consigne enregistrée dans une mémoire,
**caractérisé en ce que**
le capteur optique (16) est conçu pour acquérir des images actuelles (22) qui représentent au moins des portions des moyens de transport (4) qui présentent des irrégularités (42), et l'unité de traitement d'image est conçue pour reconnaître les irrégularités (42) des moyens de transport (4) en tant que telles et les associer à au moins un élément de transport (2, 2a, 2b) des moyens de transport (4) et pour exclure d'un traitement d'image postérieur les pixels des images actuelles (22) numérisées qui, en comparaison d'au moins une valeur de consigne, représentent au moins une irrégularité (42).

11. Dispositif selon la revendication 10, **caractérisé en ce que** l'unité de traitement d'image est reliée avec une bibliothèque de données.

12. Dispositif selon la revendication 10 ou 11, **caractérisé en ce que** l'unité de traitement d'image est reliée avec un moyen de communication pour délivrer un signal (17).
